# EUROPÄISCHE PATENTSCHRIFT

(11) **EP 3 126 114 B1**
(45) Veröffentlichungstag und Bekanntmachung des Hinweises auf die Patenterteilung: **07.02.2018**
(21) Anmeldenummer: 15711166.7
(22) Anmeldetag: 20.03.2015
(51) Int. Cl.: B29C 43/18, B29C 65/48, B29C 65/00, B29C 65/02, C08L 77/02, C08L 77/06, C08G 18/60, C08L 83/12, C09J 5/06, C08L 83/06

(54) **KUNSTSTOFF-METALL-HYBRIDBAUTEIL UND VERFAHREN ZUR HERSTELLUNG DESSELBEN**
PLASTIC-METAL HYBRID COMPONENT AND METHOD FOR PRODUCING SAME
PIÈCE HYBRIDE MÉTAL-PLASTIQUE ET PROCÉDÉ DE PRODUCTION

(30) Priorität: 31.03.2014 DE 102014104475
(43) Veröffentlichungstag der Anmeldung: 08.02.2017
(73) Patentinhaber: Volkswagen Aktiengesellschaft, 38440 Wolfsburg (DE)
(72) Erfinder: KLEMT, Christian, 38527 Meine (DE); HUNGER, René, 38550 Isenbüttel (DE); KURZ, Hansjörg, 38173 Sickte (DE)
(74) Vertreter: Gulde & Partner
(86) Internationale Anmeldenummer: PCT/EP2015/055891
(87) Internationale Veröffentlichungsnummer: WO 2015/150116

(56) Entgegenhaltungen:
- JP-A- S5 465 734
- JP-A- 2000 129 168
- JP-A- 2004 346 255
- YILGOR E ET AL: "Surface properties of polyamides modified with reactive polydimethylsiloxane oligomers and copolymers", POLYMER, ELSEVIER SCIENCE PUBLISHERS B.V, GB, Bd. 44, Nr. 24, November 2003 (2003-11), Seiten 7271-7279, XP027124822, ISSN: 0032-3861 [gefunden am 2003-10-16]
- DATABASE WPI Week 200203 Thomson Scientific, London, GB; AN 2002-025889 XP002738403, & WO 01/76865 A1 (MITSUBISHI PLASTICS INC) 18. Oktober 2001 (2001-10-18)

## Beschreibung

Die Erfindung betrifft ein Kunststoff-Metall-Hybridbauteil sowie ein dazugehöriges Verfahren zur Herstellung eines Kunststoff-Metall-Hybridbauteils.

Auf vielen Gebieten der Technik werden mittlerweile Faserverbundwerkstoffe zur Verbesserung der Bauteileigenschaften und insbesondere Gewichtsreduzierung eingesetzt. Der Faserverbundwerkstoff weist dabei zumindest zwei Hauptkomponenten auf, nämlich eine Matrix und in diese Matrix eingebettete, der Verstärkung dienende Fasern. Für die Zwecke der vorliegenden Erfindung sind lediglich Faserverbundwerkstoffe mit polymerer Matrix von Interesse. Die Kombination derartiger Faserverbundwerkstoffe mit weiteren Materialien, insbesondere Metallen, ist insbesondere im Fahrzeugbau ein Ansatzpunkt der Entwicklung neuer Leichtbautechnologien. Dabei entsteht das besondere Problem der hinreichenden Anbindung des Faserverbundwerkstoffs an das Metall. Die Herstellung eines Kunststoff-Metall-Hybridbauteils aus einem metallischen Grundkörper und einem mit dem Grundkörper verbundenen Faserverbundhalbzeug aus einem Faserverbundwerkstoff mit polymerer Matrix bedarf demnach der Entwicklung spezifischer Fügeverfahren.

Gängige Fügeverfahren umfassen beispielsweise das mechanische Fügen von Faserverbundhalbzeug und metallischen Bauteilen mit Nieten, durch Kragenfügen oder Bolzensetzen. Weiterhin kann die Verbindung zwischen Faserverbundhalbzeug und metallischen Bauteil auch über ein Klebeverfahren erfolgen. Klassische Klebeverfahren haben jedoch den Nachteil, dass in zusätzlichen Arbeitsschritten ein Klebstoff aufgetragen und ausgehärtet werden muss, was eine Automatisierung erschwert. Ferner müssen die Materialeigenschaften des Klebstoffs so beschaffen sein, dass er einerseits zum Faserverbundwerkstoff und andererseits zum metallischen Bauteil eine hinreichend hohe Haftkraft entwickelt. Darüber hinaus sollte der Klebstoff auch in seinem sonstigen mechanischen Verhalten so ausgelegt sein, dass die Vorteile des Verbunds auch tatsächlich zum Tragen kommen können. Mittlerweile wurden spezielle Schmelzklebstoffe entwickelt, die eine Anbindung von Metallen an Polymeren erlauben. Beispielsweise beschreibt EP 2 435 246 B1 einen solchen Schmelzklebstoff auf Copolyamid-Basis, der eine stoffschlüssige Anbindung an die metallische Oberfläche über Isocyanat- und Epoxid-Funktionalitäten ermöglicht.

DE 10 2008 039 869 A1 beschreibt exemplarisch ein Verfahren zur Herstellung von Leichtbauteilen, bei dem eine stoffschlüssige Anbindung von Faserverbundhalbzeug und metallischem Grundkörper durch Auftragen eines Klebstoffs vollzogen wird. Nach dem Zusammenführen der beiden Elemente in einem Presswerkzeug erfolgt eine thermische Härtung. Weitere Beispiele für den Einsatz von Kunststoff-Metall-Hybridbauteilen im Fahrzeugbau sind DE 10 2006 027 546 A1 und DE 10 2006 058 601 A1 zu entnehmen. Auch hier erfolgt eine stoffschlüssige Anbindung zwischen metallischen Bauteilen und dem zur Verstärkung dienenden Faserverbundhalbzeug durch Auftragen eines geeigneten Klebstoffs.

Demnach zeigen die bekannten stoffschlüssigen Fügeverfahren unter Zuhilfenahme von Klebstoffen die zuvor angesprochenen Nachteile im Verfahrensablauf, die einer verstärkten Automatisierung entgegenstehen. Insbesondere sind keine geeigneten Haftvermittler für das prozessintegrative Fügen im Pressverfahren für die Verbindung von Polymerwerkstoffen mit Metallen bekannt.

Ein oder mehrere der geschilderten Nachteile des Standes der Technik lassen sich mit Hilfe des erfindungsgemäßen Verfahrens zur Herstellung eines Kunststoff-Metall-Hybridbauteils aus einem metallischen Grundkörper und einem mit dem Grundkörper stoffschlüssig verbundenen Faserverbundhalbzeug beheben oder zumindest lindern. Das Verfahren umfasst dabei die Schritte:
(i) Bereitstellen eines Faserverbundhalbzeugs auf Basis von Polyamid, bei dem zumindest ein Teil der Oberfläche des Halbzeugs aus einer Polymerzusammensetzung geformt ist, die folgendes enthält:
   a) 100 Gewichtsteile eines Polyamids;
   b) 0,5 bis 20 Gewichtsteile eines oder mehrerer haftvermittelnder Additive der Formel I):

      MₐM'_{b}D_{c}D'_{d} (I)

      mit
      M = [RₐSiO_{1/2}]
      M' = [R'R₂SiO_{1/2}]
      D = [R₂SiO_{2/2}]
      D' = [R'RSiO_{2/2}]
   wobei jedes R unabhängig voneinander für Methyl oder Phenyl steht und
   R' ein Glycidyloxypropyl-Rest der Formel (II) ist 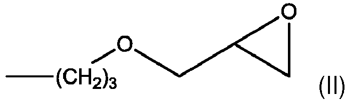 und wobei für die Indizes gilt
   a = 0 bis 2
   b = 0 bis 2
   c = 10 bis 500
   d = 0 bis 50
   a + b = 2 und
   b + d ≥ 2;
(ii) Bereitstellen eines metallischen Grundkörpers;
(iii) optional, Vorbehandlung der Oberfläche des metallischen Grundkörpers zur Erzeugung von beispielsweise OH-Funktionalitäten;
(iv) Einbringen des metallischen Grundkörpers und des Faserverbundhalbzeugs in ein Presswerkzeug und Schließen des Werkzeugs; und
(v) stoffschlüssiges Fügen von Faserverbundhalbzeug und metallischem Grundkörper durch Verpressen unter Druck und Temperatureinwirkung.

Im Schritt (i) wird demgemäß ein Faserverbundhalbzeug bereitgestellt, dessen Oberfläche zumindest partiell aus einem durch Zusatz eines haftvermittelnden Additivs modifizierten polymeren Werkstoff besteht. Die dazu verwendete Polymerzusammensetzung beinhaltet demgemäß zumindest zwei Komponenten, nämlich ein Polyamid und ein in das Polyamid eingebrachtes Additiv (oder eine Mischung von Additiven), das im Schritt (v) eine stoffschlüssige Anbindung an die Oberfläche des metallischen Grundkörpers über seine reaktive Epoxid-Gruppe ermöglicht. Dieses haftvermittelnde Additiv - ein funktionalisiertes Polysiloxan - lässt sich dabei ohne weiteres und mit gängigen Verfahren in die Polyamidbasis einarbeiten. Das Additiv fungiert im Anwendungsfall als Haftvermittler. Es verändert dabei die mechanischen, thermischen und rheologischen Eigenschaften des Polyamids nur marginal.

Bei zu geringer Additivkonzentration ist die Haftwirkung nicht mehr ausreichend. Zu hohe Additivkonzentration haben dagegen eine negative Auswirkung auf die mechanischen, thermischen und rheologischen Eigenschaften des Polymers (Viskosität steigt an, Wärmeausdehnungskoeffizient nimmt zu, Selbstvernetzung des Additivs, Agglomeratbildung).

Besonders bevorzugt ist, wenn die Polymerzusammensetzung 0,3 bis 10 Gewichtsteile, insbesondere bevorzugt 0,5 bis 5 Gewichtsteile des haftvermittelnden Additivs enthält. Gemäß einer bevorzugten Variante steht R für Methyl. Hierdurch ergibt sich zum einen ein Kostenvorteil in der Herstellung und zum anderen ist die Verarbeitung des Additivs mit dem Polyamid aufgrund der gegenüber phenylsubstituieren Additiven verringerten Schmelz- und Glasübergangstemperaturen vereinfacht.

Ferner ist bevorzugt, wenn ein Verhältnis der Summe der Indizes a + c zur Summe der Indizes b + d im Bereich (a+b)/(b+d) von 2 bis 50, insbesondere im Bereich von 4 bis 20 und besonders bevorzugt im Bereich von 5 bis 15 liegt. Das angegebene Verhältnis der nicht-funktionalisierten Siloxaneinheiten, also der Methyl- und/oder Phenylreste aufweisenden Polysiloxaneinheiten zu den Polysiloxaneinheiten, die den Glycidyloxypropyl-Rest der Formel (II) tragen, hat sich bei der Herstellung von Kunststoff-Metall-Hybridbauteilen als besonders geeignet herausgestellt. Ein zu geringer Anteil des Rests der Formel (II) führt zu einer nicht hinreichenden stoffschlüssigen Anbindung an die Oberfläche des metallischen Grundkörpers. Zu hohe Anteile erschweren dagegen die Verarbeitung des Additivs zur Polymerzusammensetzung und die Synthese dieser Additive ist wesentlich aufwendiger.

Bevorzugt ist weiterhin, dass für Index c gilt: c = 15 bis 100, insbesondere c = 20 bis 50. Für den Fall, dass b = 2 ist, gilt für Index d vorzugsweise: d = 0 bis 20, insbesondere d = 1 bis 10. Für den Fall, dass b = 0 ist, gilt für Index d vorzugsweise: d = 2 bis 20, insbesondere d = 3 bis 10. Mit den genannten Festlegungen lassen sich die Eigenschaften des Additivs mit Hinsicht auf die Polyamidmatrix und spätere Weiterverarbeitung der Polymerzusammensetzung, zum Beispiel zu einer Folie, optimieren.

Der Glycidyloxypropyl-Reste der Formel (II) können im Additiv der Formel (I) statistisch verteilt vorliegen. Statistische Verteilungen sind blockweise aufgebaut mit einer beliebigen Anzahl an Blöcken, die einer beliebigen Sequenz aufeinander folgen oder sie können eine randomisierten Verteilung bilden, sie können auch alternierend aufgebaut sein oder auch über die Kette des Polymers einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Polyether modifizierte Siloxane können durch edelmetallkatalysierte Hydrosilylierung von Allylglycidylether (1-Allyloxy-2,3-epoxypropan; CAS Nummer 106-92-3) mit Wasserstoffsiloxanen der Formel (III)

MₐM'_{b}D_{c}D'_{d} (III)

mit
M = [RₐSiO_{1/2}]
M' = [HR₂SiO_{1/2}]
D = [R₂SiO_{2/2}]
D' = [HRSiO_{2/2}]
wobei jedes R unabhängig voneinander für Methyl oder Phenyl steht und wobei für die Indizes gilt
a = 0 bis 2
b = 0 bis 2
c = 10 bis 500
d = 0 bis 50
a + b = 2 und
b + d ≥ 2,
wie beispielsweise in Beispiel 4 der EP 1 520 870 A1 beschrieben, hergestellt werden.

Die bei der Herstellung der Polyether modifizierten Siloxane verwendeten Wasserstoffsiloxane der Formel (III) können wiederum wie im Stand der Technik, beispielsweise in EP 1 439 200 A1 beschrieben, hergestellt werden.

Das Polyamid der erfindungsgemäßen Polymerzusammensetzung ist vorzugsweise ausgewählt aus der Gruppe umfassend Polyamid 6, Polyamid 12 und Polyamid Polyamid 6.6. Insbesondere ist das Polyamid Polyamid 6. Das haftvermittelnde Additiv ist speziell für den Einsatz in Polyamiden entwickelt worden. Das Additiv lässt sich hervorragend mit Polyamiden, insbesondere Polyamid 6, verarbeiten, ohne dass es zu einer Entmischung oder unerwünschten Reaktion zwischen Additiv und Polymer kommt.

Die polymere Zusammensetzung kann neben dem Polyamid und dem haftvermittelnden Additiv noch weitere Zusatzstoffe enthalten. Diese zusätzlichen Additive dienen beispielsweise der besseren Verarbeitung der Polymerzusammensetzung, Farbgebung oder Einstellung sonstiger Materialeigenschaften. Vorzugsweise weist die Polymerzusammensetzung kumulativ 0 bis 100 Gewichtsteile, insbesondere 0 bis 20 Gewichtsteile derartiger zusätzlicher Additive auf.

Die Polymerzusammensetzung wird aus den einzelnen Bestandteilen vorzugsweise durch Schmelzemischen in einem knetenden Aggregat hergestellt. Das haftvermittelnde Additiv und gegebenenfalls weitere Zusatzstoffe können jeweils für sich oder zusammen als Mischung direkt dem Polyamid-Granulat oder der Polyamid-Schmelze zugegeben werden. Gegebenenfalls wird die Polymerzusammensetzung aus den einzelnen Komponenten erst kurz vor der Weiterverarbeitung erzeugt, zum Beispiel in einem Extruder einer Anlage zur Folienerzeugung. Die Komponenten können ebenso als Mischung in Form eines Masterbatches zugegeben werden.

Die verwendeten haftvermittelnden Additive, die im allgemeinen eine Viskosität zwischen 10 und 10.000 mPas aufweisen, können entweder mit einer Flüssigdosierung dem Polyamid bei der Herstellung der Polymerzusammensetzung zugesetzt werden oder die Additive werden als Masterbatch in fester Form bereitgestellt. Letzteres ist bevorzugt, da die Verarbeitung flüssiger Komponenten in Extrudern besonders bei Konzentrationen oberhalb von 10 % technisch nur aufwendig realisierbar ist.

Für die Herstellung von Folien aus der Polymerzusammensetzung kommen unterschiedlichen Verfahren in Frage:
Bei Gießverfahren wird die Polymerzusammensetzung im Extruder (meist Einschneckenextruder) verflüssigt und über eine Breitschlitzdüse auf eine laufende und wassergekühlte Walze gegossen, wodurch bei hoher Produktionsgeschwindigkeit Folien mit Schichtdicken von 25 bis 600 µm herstellbar sind.

Beim Blasfolienverfahren wird das Extrudat ebenfalls im Extruder verflüssigt (meist Einschneckenextruder) und durch eine ringförmige vertikale Düse mit Hilfe eines Luftstroms eine Schmelzschlauch der Polymerzusammensetzung erzeugt, die dann im Luftstrom abgekühlt wird. Die üblichen Schichtdicken liegen zwischen 10 und 500 µm.

Mit beiden zuvor genannten Verfahren können auch Mehrschichtfolien gefertigt werden. Hier besteht zumindest eine der äußeren Schichten der Mehrschichtfolie aus der erfindungsgemäßen Polymerzusammensetzung. Es sind also beispielsweise Schichtdickenformationen in folgender Art und Weise darstellbar:
1. Schicht = erfindungsgemäße Polymerzusammensetzung bestehend aus einem Polyamid und mindestens einem haftvermittelnden Additiv
2. Schicht = Polyamid
3. Schicht = erfindungsgemäße Polymerzusammensetzung bestehend aus einem Polyamid und mindestens einem haftvermittelnden Additiv

Aus dem additivierten Polyamid kann somit unter Anwendung bekannter Verfahren (zum Beispiel Schmelz-, Folien- oder Pulverimprägnierung im Doppelbandpressverfahren, Intervallheißpressen) das in Schritt (i) verwendete Faserverbundhalbzeug hergestellt werden. Das Faserverbundhalbzeug zeichnet sich demnach dadurch aus, dass wenigsten bereichsweise die Oberfläche aus der Polymerzusammensetzung besteht. Nur dort, wo in nachgeschalteten Verarbeitungsschritten eine stoffschlüssige Anbindung an den metallischen Grundkörper folgen soll, bedarf es der Bereitstellung des Additivs im oberflächennahen Bereich. Das Additiv muss demnach weder im gesamten Volumen des Faserverbundhalbzeugs noch im gesamten oberflächennahen Bereich vorhanden sein.

Zur Herstellung des endfertigen Faserverbundhalbzeugs schließen sich gegebenenfalls weitere Prozessteilschritte, wie Konfektionierung, optional Vorformung und dergleichen an. Das Faserverbundhalbzeug wird für die nachfolgenden Verfahrensschritte vorgewärmt.

Gemäß Schritt (ii) des Verfahrens wird ein metallischen Grundkörper bereitgestellt. Als metallische Werkstoffe eigenen sich insbesondere Stahl, zum Beispiel schmelztauchveredelter Tiefziehstahl HX420LAD + Z100MB. Auch andere metallische Werkstoffe, wie beispielsweise Edelstähle, Aluminium und Titan können eingesetzt werden.

Im Schritt (iii) des Verfahrens erfolgt optional eine Vorbehandlung der Oberfläche des metallischen Grundkörpers zur Erzeugung von Funktionalitäten (zum Beispiel Hydroxy -OH, Amino -NH₂, Carboxyl -COOH),bevorzugt OH-Funktionalitäten. Diese Vorbehandlung kann umfassen eine Vorreinigung der zu behandelnden Metalloberfläche auf trocken-chemische oder nass-chemische Weise oder thermisch mittels energiereicher Strahlung, z. B. Laser und Plasma (Abdampfen von Verunreinigungen) oder mechanisch, z. B. strahlende Verfahren (Sandstrahlprozesse - Druckstrahlen, Saugstrahlen). Vorzugsweise, insbesondere wenn der metallische Grundkörper aus verzinktem Stahlblech besteht, wird im Schritt (iii) eine OH-Funktionalität, insbesondere silikatisch (SiOx), auf der Oberfläche des metallischen Grundkörpers erzeugt. Die Erzeugung einer solchen Deckschicht kann beispielsweise durch sogenanntes Sandstrahl-Coating erfolgen; eine Methode, bei der die Beschichtung der Substratoberfläche im Strahlprozess unter Ausnutzung des tribochemischen Effektes vollzogen wird. Gemäß diesem Beschichtungsverfahren wird insbesondere ein modifiziertes Strahlenmittel eingesetzt, dessen Oberfläche organofunktionelles Silan enthält. Der Aufprall des beschichteten Korns führt zur Beschichtung der Substratoberfläche. Die SiOx-Schicht stellt an ihrer Oberseite OH-Funktionalitäten zur stoffschlüssigen Anbindung des haftvermittelnden Additivs bereit. Zudem wird durch das Sandstrahl-Coating die Bindungsoberfläche vergrößert.

Der metallische Grundkörper wird im Anschluss an die Vorbehandlung im Presswerkzeug positioniert und auf eine Temperatur im Bereich von 80 bis 100°C erwärmt.

Anschließend wird das vorgewärmte Faserverbundhalbzeug eingelegt und das Presswerkzeug geschlossen (Schritt (iv)). Durch Erhitzen unter Druck erfolgt schließlich stoffschlüssiges Fügen von Faserverbundhalbzeug und metallischem Grundkörper.

Schritt (v) des Verfahrens erfolgt vorzugsweise bei einer Temperatur oberhalb der Schmelztemperatur des thermoplastischen Polymers des Faserkunststoffverbunds. Insbesondere liegt die Temperatur im Schritt (v) im Bereich von 230°C bis 260°C. Die Temperatur wird vorzugsweise für 0,5 bis 10 s aufrechterhalten. Der Druck im Schritt (v) liegt vorzugsweise im Bereich von 10 bis 200, vorzugsweise 25 bis 150 bar.

Unmittelbar im Anschluss an Schritt (v) wird zur Kühlung vorzugsweise eine Werkzeugtemperatur im Bereich von 70°C bis 130°C für einen Zeitraum von 15 bis 90 s vorgegeben.

Ein weiterer Aspekt der Erfindung richtet sich auf ein Kunststoff-Metall-Hybridbauteil aus einem metallischen Grundkörper und einem mit dem Grundkörper stoffschlüssig verbundenen Faserverbundhalbzeug, das mittels des zuvor beschriebenen Verfahrens hergestellt wurde. Kunststoff-Metall-Hybridbauteile für den Automobilbau umfassen insbesondere Längs- und Querträgerstrukturen sowohl in der Bodengruppe als auch in der Karosserie (Bodengruppe: z. B. Sitzquerträger, Längsträger, Tunnelverstärkung; Karosserie: z. B. Säulen und Säulenverstärkungen, Holme und Holmverstärkungen sowie Dachquerträger).

Weitere bevorzugte Ausgestaltungen der Erfindung ergeben sich aus den übrigen, in den Unteransprüchen genannten Merkmalen sowie der nachfolgenden Beschreibung.

Die Erfindung wird nachfolgend in Ausführungsbeispielen und anhand der zugehörigen Zeichnungen näher erläutert. Es zeigen:
- Figur 1: eine schematische Darstellung des Aufbaus eines nach dem Film-Stacking-Verfahren hergestellten Faserverbundhalbzeugs; und
- Figur 2: eine schematische Darstellung des Aufbaus eines nach dem Schmelze-Direkt-Verfahren hergestellten Faserverbundhalbzeugs
- Figur 3: ein erfindungsgemäßes Kunststoff-Metall-Hybridbauteil in Form eines gepatchten Sitzquerträgers;
- Figur 4: ein schematisches Ablaufdiagramm des Herstellungsprozesses für den gepatchten Sitzquerträger gemäß Figur 3;
- Figur 5: ein schematisches Schliffbild durch einen vorbehandelten metallischen Grundkörper;
- Figur 6: ein schematisches Schliffbild durch ein erfindungsgemäßes randschichtmodifiziertes Verstärkungshalbzeug
- Figur 7: ein weiteres erfindungsgemäßes Kunststoff-Metall-Hybridbauteil mit vereinfachter Geometrie; und
- Figuren 8a und 8b: Versuchsaufbauskizzen zur Illustration von Fallraumversuchen mit dem Kunststoff-Metall-Hybridbauteil gemäß Figur 7.

Die erfindungsgemäßen Polymerzusammensetzungen, die erfindungsgemäßen Faserverbundhalbzeuge enthaltend die erfindungsgemäßen Polymerzusammensetzungen und das erfindungsgemäße Verfahren zur Herstellung des Faserverbundhalbzeugs werden nachfolgend beispielhaft beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25°C ermittelt.

### Allgemeine Vorschrift zur Herstellung der Polymerzusammensetzung

In einem Extruder wurden haftvermittelnden Additive der Formel (I)

MₐM'_{b}D_{c}D'_{d} (I)

mit
M = [RₐSiO_{1/2}]
M' = [R'R₂SiO_{1/2}]
D = [R₂SiO_{2/2}]
D' = [R'RSiO_{2/2}]
wobei jedes R für Methyl steht und
R' ein Glycidyloxypropyl-Rest der Formel (II) ist 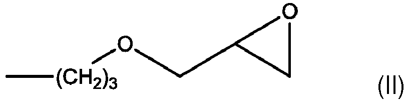 entweder direkt durch Flüssigdosierung Polyamiden (Polyamid 6 oder Polyamid 6,6) zugesetzt oder als Masterbatch in fester Form zugeführt.

Im Falle einer Flüssigdosierung (z.B. von der Firma Movacolor, NL) wurden die Additive im ersten Drittel der Extrusionsstrecke homogen eingemischt (0,1 bis 20 Gew.% bezogen auf das Gesamtgewicht der Polymerzusammensetzung). Bei hochviskosen Additiven wurde alternativ eine Pumpe mit beheizbarer Zuleitung und beheizbarem Vorlagegefäß verwendet.

Alternativ wurden 50%ige Masterbatche der Additive in Polyamid hergestellt. Die Masterbatche wurden mit einem separaten Feeder in den Haupteinzug der Extrusionsstrecke dosiert, wo auch das entsprechende Polyamid zugeführt wurde.

**Tab. 1: Verwendete Additive gemäß Formel (I)**

| | a | b | c | d |
|---|---|---|---|---|
| OMS 1 | 0 | 2 | 18 | 0 |
| OMS 2 | 2 | 0 | 89 | 7 |
| OMS 3 | 2 | 0 | 43 | 5 |
| OMS 4 | 2 | 0 | 73 | 25 |
| OMS 5 | 0 | 2 | 16 | 2 |

Das Temperaturprofil im Extruder entsprach der Empfehlung des Herstellers des entsprechenden Polyamids. Gegebenenfalls wurden die Polyamide vorgetrocknet, wenn der Feuchtegehalt oberhalb 0,1 Gew.% lag. Die Polymerzusammensetzungen wurden mit einer Maschinenleistung von 3-10kg pro Stunde in Abhängigkeit vom Füllgrad und Polymer verarbeitet.

### Prüfung der erfindungsgemäßen Polymerzusammensetzungen

Die Güte der Verteilung der verwendeten Additiven in den Polyamiden wurde direkt am Strangbild bei Austritt aus dem Extruderkopf beurteilt. Bildete sich ein homogener Strang ohne Blasen, ohne Abriss des Strangs und ohne Variation der Dicke des Strangs um mehr als 20%, wurde von einer homogenen Verteilung des Additives im Polyamid ausgegangen. In den nachgenannten Ausführungsbeispielen wurde dieser Zustand als "OK" gekennzeichnet.

**Tab. 2: Polymerzusammensetzung auf Basis von Polyamid 6 (PA6) und Polyamid 6,6 (PA6,6)**

| Zusammensetzung | 0,1% | 0,5% | 1% | 2% | 4% | 10% | 20% |
|---|---|---|---|---|---|---|---|
| PA6 / OMS1 | OK | OK | OK | OK | OK | OK | OK |
| PA6 / OMS2 | OK | OK | OK | OK | OK | OK | OK |
| PA6 / OMS3 | | OK | | OK | OK | OK | |
| PA6 / OMS4 | | OK | | OK | OK | OK | |
| PA6 / OMS5 | | OK | | OK | OK | OK | |
| | | | | | | | |

| Zusammensetzung | 2% | 4% | 6% | 8% | 10% | | |
|---|---|---|---|---|---|---|---|
| PA6 / OMS MB 1 | OK | OK | OK | OK | OK | | |
| PA6 / OMS MB 2 | OK | OK | OK | OK | OK | | |
| PA6 / OMS MB 3 | | | OK | | OK | | |
| PA6 / OMS MB 4 | | | OK | | OK | | |
| PA6 / OMS MB 5 | | | OK | | OK | | |
| | | | | | | | |

| Zusammensetzung | | 0,5% | 1% | 2% | 4% | 10% | |
|---|---|---|---|---|---|---|---|
| PA6,6 / OMS 1 | | OK | OK | OK | OK | OK | |
| PA6,6 / OMS 2 | | OK | OK | OK | OK | OK | |

MB bedeutet Dosierung als Masterbatch, kein Zusatz bedeutet Dosierung als Flüssigdosierung; keine Angabe bedeutet, dass diese Zusammensetzungen nicht hergestellt wurden. Alle angefertigten Polymerzusammensetzung erfüllten alle oben genannten Qualitätskriterien.

### Folienherstellung

Es wurden Folien im Gießverfahren, also sogenannte Cast Folien mit einer Schichtdicke von 50 bis 600 µm hergestellt (Cast Film Anlage der Firma Collin). Die Qualität der Folien wurde durch Messung und Vergleich der Schichtdicke in verschiedenen Bereichen der Folie beurteilt, wobei eine Variation der Schichtdicke von weniger als 15% in den nachfolgenden Anwendungsbeispielen als OK bezeichnet wurde.

Es ist nicht erforderlich, dass die resultierende Folie aus der Polymerzusammensetzung transparent ist sie kann vielmehr ein opakes Erscheinungsbild haben.

**Tab. 3: Folien - Polymerzusammensetzung und Schichtdicke**

| | Folienschichtdicke in µm | | | | | |
|---|---|---|---|---|---|---|
| Polymerzusammensetzung | 50 | 100 | 150 | 250 | 400 | 600 |
| PA6 / 0,5% OMS 1 | OK | OK | OK | OK | OK | |
| PA6 / 2% OMS 1 | OK | OK | OK | OK | OK | OK |
| PA6 / 4% OMS 1 | OK | OK | OK | OK | OK | |
| PA6 / 1 0% OMS 1 | OK | OK | OK | OK | | |
| PA6 / 0,5% OMS 2 | OK | OK | OK | OK | OK | OK |
| PA6 / 2% OMS 2 | OK | OK | OK | OK | OK | OK |
| PA6 / 4% OMS 2 | OK | OK | OK | OK | OK | |
| PA6 / 1 0% OMS 2 | OK | OK | OK | OK | OK | |
| PA6 / 2% OMS MB 2 | OK | OK | OK | OK | OK | OK |
| PA6 / 4% OMS MB 2 | OK | OK | OK | OK | | |

Nicht angegebene Werte bedeuten, dass diese Folien nicht hergestellt wurden. Es ist ersichtlich, dass alle angefertigten Folien die genannten Qualitätskriterien erfüllten.

### Herstellung eines Faserverbundhalbzeugs auf Basis einer Folie

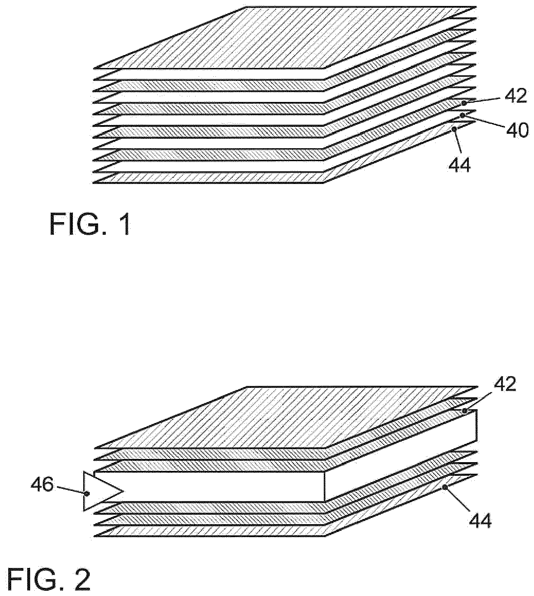

Die gefertigten Folien wurden zu Faserverbundhalbzeugen nach dem Film-Stacking-Verfahren oder Schmelze-Direkt-Verfahren weiterverarbeitet. Figur 1 illustriert dabei schematisch den Aufbau des Faserverbundhalbzeugs beim Film-Stacking-Verfahren und Figur 2 beim Schmelze-Direkt-Verfahren.

Die Ausgestaltung der Anlagentechnik zur Durchführung der beiden Verfahren ist hinreichend bekannt und umfasst Einheiten zur Materialzuführung, eine Intervall-Presseinheit mit Imprägnier- und Verbundstrecke sowie nachgeschaltet ein Walzwerk und ein Konfektioniereinheit. Die Materialzuführung beinhaltet Rollenhalterungen für die einzelnen in den jeweiligen Verfahren eingesetzten Polyamidfolien und Textilhalbzeuge, wie Gewebe oder Gelege. Im Falle des Schmelze-Direkt-Verfahrens ist zudem eine Plastifiziereinheit für die Direktimprägnierung mit Kunststoffschmelzen vorhanden. Die Imprägnier- und Verbundstrecke, in der die zugeführten Folien, Textilhalbzeuge und ggf. Schmelzen zusammengeführt werden, ist durch die Intervall-Presseinheit vorgegeben. Derartige Anlagen sind hinreichend bekannt, siehe beispielsweise Publikationen der Firma Neue Materialien Fürth GmbH.

Figur 1 ist exemplarisch eine Abfolge alternierender Lagen aus den verschiedener Materialien zu entnehmen, wie sie zur Herstellung eines Faserverbundhalbzeugs nach dem Film-Stacking-Verfahren Verwendung finden kann. Zur Bereitstellung des Matrixmaterials werden gemäß diesem Ausführungsbeispiel insgesamt fünf Matrixfolien 40 der Intervall-Presseinheit zugeführt. Jede Matrixfolie 40 besteht aus Polyamid, insbesondere Polyamid 6. Vier Lagen eines Verstärkungshalbzeugs 42 werden alternierend zwischen den Matrixfolien 40 angeordnet. Das Verstärkungshalbzeug 42 beinhaltet die zur Verstärkung dienenden Fasern. Mögliche Fasertypen sind dabei beispielsweise Glasfasern, Kohlenstofffasern oder Aramidfasern. Mögliche Verstärkungshalbzeugtypen umfassen Gelege und Gewebe. Schließlich wird im Randbereich des dargestellten Schichtstapels jeweils eine modifizierte Randfolie 44 aus der erfindungsgemäßen Polymerzusammensetzung bereitgestellt.

Auch beim Schmelze-Direkt-Verfahren werden Lagen aus Verstärkungshalbzeug 42 und modifizierter Randfolie 44 in der in Figur 2 dargestellten Abfolge der Intervall-Presseinheit zugeführt. Darüber hinaus wird über eine Plastifiziereinheit eine Kunststoffschmelze 46 aus Polyamid, insbesondere Polyamid 6, zugeführt.

Der in den Figuren 1 und 2 dargestellte Aufbau, insbesondere Schichtabfolge und Anzahl der Lagen aus Verstärkungshalbzeug 42 und Matrixfolie 40 ist variabel und kann den jeweiligen Erfordernissen angepasst werden. Für die Zwecke der Erfindung von Bedeutung ist lediglich, dass einseitig oder beidseitig eine Randschichtmodifikation des Faserverbundhalbzeugs durch Kaschieren mit der modifizierten Randfolie 44 aus der erfindungsgemäßen Polymerzusammensetzung erfolgt.

### Herstellverfahren eines Faserverbundhalbzeugs ohne Folienherstellung

Eine weitere Möglichkeit der Herstellung eines randschichtmodifizierten Faserverbundhalbzeugs ohne vorherige Folienherstellung ist das Doppelbandpressverfahren. Hierbei werden eine oder mehrere Lagen eines trockenen (nicht imprägnierten) endlosfaserverstärkten Faserverbundhalbzeugs in eine Doppelbandpresse eingezogen. Im Zwickelbereich zwischen den Einzellagen wird - analog zum Schmelze-Direkt-Verfahren - das Matrixmaterial vorzugsweise über eine Breitschlitzdüse auf das trockene Textil aufgebracht.

### Herstellung eines Kunststoff-Metall-Hybridbauteils

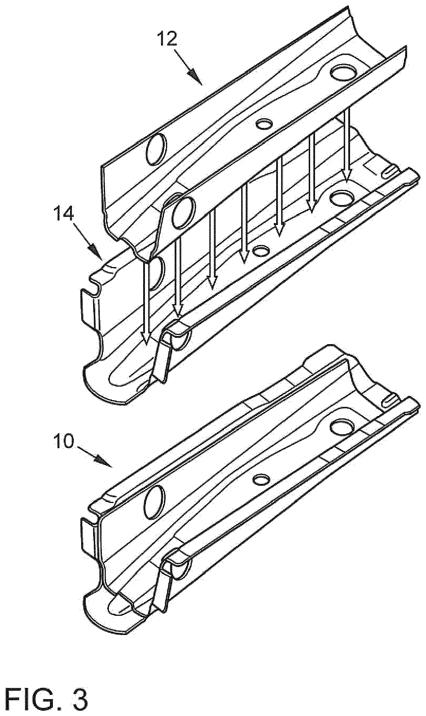

Figur 3 zeigt im unteren Abschnitt ein erfindungsgemäßes Kunststoff-Metall-Hybridbauteil 10, hier in Form eines Sitzquerträgers. Der Sitzquerträger besteht aus einem Faserverbundhalbzeug 12, das stoffschlüssig mit einem metallischen Grundkörper 14 verbunden ist. Vorliegend besteht der metallische Grundkörper 14 aus verzinktem Stahlblech, das in noch näher erläuterter Weise vorbehandelt wurde. Das Faserverbundhalbzeug 12 wurde wie vorab beschrieben hergestellt und konfektioniert.

Vor dem stoffschlüssigen Fügen der beiden Komponenten wird der metallischen Grundkörper 14 durch Sandstrahl-Coating mit einem modifizierten Strahlenmittel behandelt. Das modifizierte Strahlenmittel weist Körner auf, deren Oberfläche ein organofunktionelles Silan trägt (ein solches modifiziertes Stahlmittel ist zum Beispiel bei der Firma 3M ESPE erhältlich). Mit dem Strahlmittel wird die Oberfläche des verzinkten Stahlblechs gereinigt, womit auch eine Erhöhung der Rautiefe einhergeht. Beim Aufprall der beschichteten Körner des Strahlmittels wird durch den sogenannten tribochemischen Effekt das an die einzelnen Körner gebundene organofunktionelle Silan auf die Substratoberfläche übertragen, so dass sich eine SiOx-Schicht bildet.

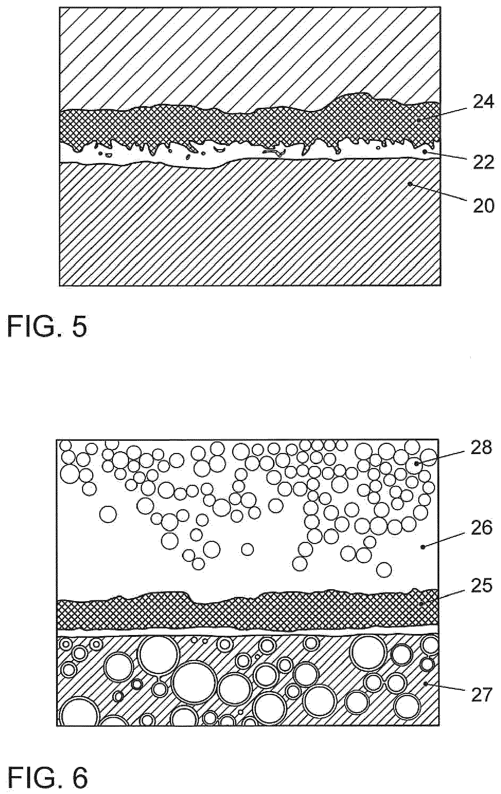

Figur 5 zeigt schematisch ein Schliffbild durch einen oberflächennahen Bereich des vorbehandelten metallischen Grundkörpers. Der voluminöse Stahlkörper 20 wird von einer dünnen Zinkschicht 22 bedeckt. Durch das additive Sandstrahl-Coating schließt sich der Zinkschicht 22 eine SiOx-Schicht 24 an.

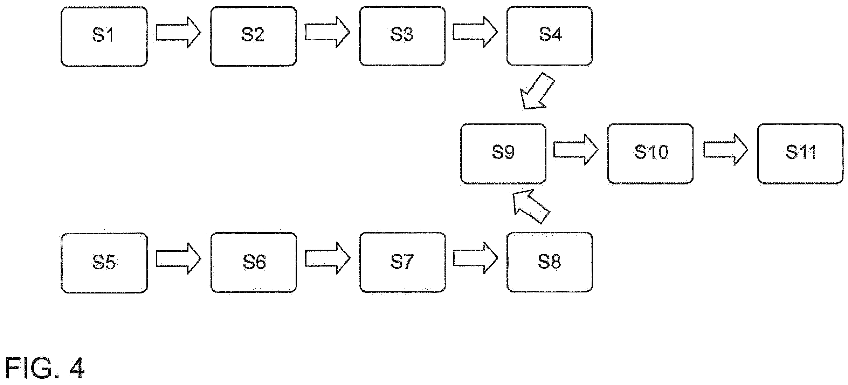

Figur 4 illustriert den Ablauf des Herstellungsverfahrens für ein Kunststoff-Metall-Hybridbauteil 10 aus einem metallischen Grundkörper 14 und einem mit dem metallischen Grundkörper 14 stoffschlüssig verbundenen Faserverbundhalbzeug 12.

In Schritt S1 wird zunächst der metallische Grundkörper 14, also beispielsweise das Blechteil für den Sitzquerträger, hergestellt. Das umgeformte Blechteil wird nach der Anlieferung (Schritt S2) wie zuvor beschrieben durch Sandstrahl-Coating vorbehandelt (Schritt S3). Anschließend wird das vorbehandelte Blechteil in einem beheizbaren Presswerkzeug positioniert und dort auf eine Temperatur im Bereich oberhalb der Schmelztemperatur des Matrixmaterials des Faserverbundhalbzeugs 12 vorgewärmt (Schritt S4). Matrixabhängig wird dabei ein Temperaturbereich von 220 °C bis 300 °C bevorzugt. Insbesondere wird bei Polyamid 6 als Matrixmaterial des Faserverbundhalbzeugs 12 eine Temperatur im Bereich von 230 °C bis 260 °C vorgegeben.

Nach dem Anliefern des Materials für das Faserverbundhalbzeug (Schritt S5) wird dieses entsprechend konfektioniert (Schritt S6). Das Faserverbundhalbzeug wird dann in einem Schritt S7 vorgewärmt. Die Erwärmung kann mittels Infrarotstrahlung erfolgen. Die Temperatur sollte im Bereich von 30 bis 70 °C oberhalb der Schmelztemperatur des Matrixmaterials des Faserverbundhalbzeugs 12 liegen (vorzugsweise etwa 50 °C).

Danach wird das erwärmte Faserverbundhalbzeug 12 auf dem vorgewärmten und im Presswerkzeug positionierten metallischen Grundkörper 14 abgelegt (Schritt S8). Anschließend wird im Schritt S9 das Presswerkzeug geschlossen und das eigentliche stoffchemische Fügen von metallischem Grundkörper 14 und Faserverbundhalbzeug 12 erfolgt.

Anschließend wird das Kunststoff-Metall-Hybridbauteil 10 unter Druck im Bereich von 10 bis 200 bar, vorzugsweise 25 bis 150 bar, besonders bevorzugt 30 bis 70 bar, insbesondere 50 bar, für 0.5 bis 10 Sekunden gefügt bzw. verpresst.

Anschließend wird - gegebenenfalls unter Aufrechterhaltung des Drucks - das Presswerkzeug abgekühlt indem die Werkzeugtemperatur auf 70°C bis 130°C für einen Zeitraum von 15 bis 90 Sekunden geregelt wird (Schritt S10). Das fertige Kunststoff-Metall-Hybridbauteil 10 wird schließlich der Presse entnommen (Schritt S11).

Figur 6 zeigt einen schematischen Ausschnitt aus einem Schliffbild durch das modifizierte Faserverbundhalbzeug 12 und zwar in dessen Randbereich. Der modifizierte Bereich 25 wird unterhalb durch die bei der Schliffherstellung verwendete Einbettungsmasse 27 begrenzt. Mit Anderen Worten, der modifizierte Bereich 25 bildet die Randschicht bzw. den oberflächennahen Bereich des Faserverbundhalbzeugs 12, der die vorabbeschriebene Polymerzusammensetzung mit polyamidischer Grundmatrix und haftvermittelndem Additiv enthält. Oberhalb des modifizierten Bereichs 25 befindet sich ein unmodifizierter Bereich 26 mit polyamidischem Matrixmaterial. Dieser enthält weiterhin die Verstärkungsfasern 28.

An der Grenzfläche zwischen dem modifiziertem Bereich 25 der Figur 6 und der SiOx-Schicht 24 aus Figur 5 erfolgt eine stoffschlüssige Anbindung durch Reaktion der Epoxid-Funktion des Additivs mit einer oberflächennahen OH-Funktion der SiOx-Schicht 24.

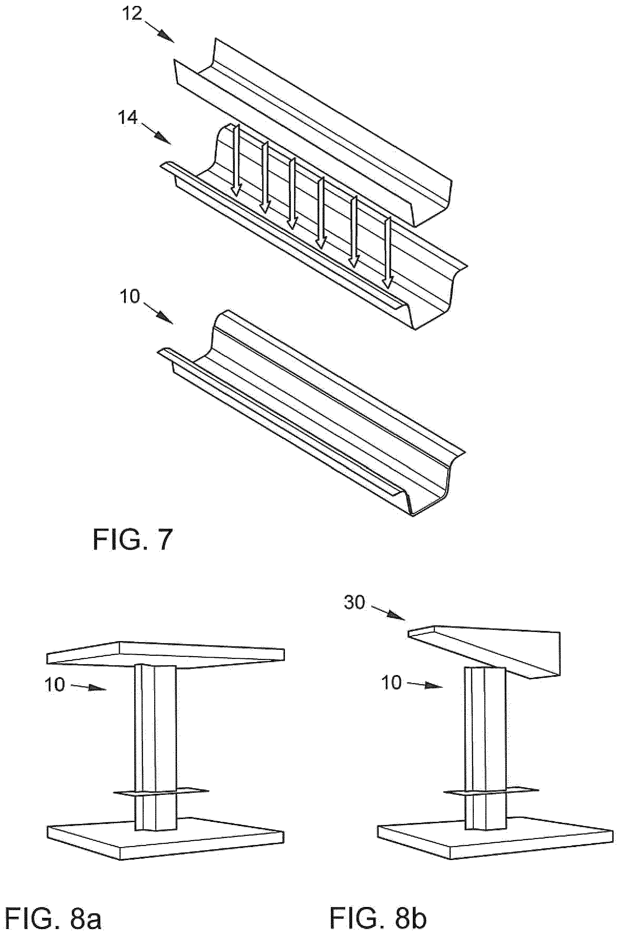

Zur Testung der mechanischen Eigenschaften wurden Kunststoff-Metall-Hybridbauteile 10 mit der in Figur 7 dargestellten vereinfachten Geometrie in der zuvor geschilderten Art und Weise hergestellt. Das Deformationsverhalten der fertigen Kunststoff-Metall-Hybridbauteile 10 wurde mit verschiedenen Versuchsaufbauten erfasst. In Fallturmversuchen wurde zum einen eine rein axiale Belastung und zum anderen eine mehraxiale Belastung durch Verwendung eines Parallelelementes 30 untersucht. Die Fallhöhe betrug etwa 1,20 m und das Fallgewicht 140 kg. Das Stahlblech des Kunststoff-Metall-Hybridbauteils hat eine Dicke von 1 mm und der Faserverbund eine Dicke von 2 mm. Als Referenzen wurden Stahlbleche mit einer Dicke von 1,6 mm und 1 mm herangezogen. Es konnte gezeigt werden, dass die Verformungswege des Kunststoff-Metall-Hybridbauteils in beiden Versuchsaufbauten dem des 1,6 mm dicken Stahlblech entsprachen. Das Gewicht des gepatchten Bauteils gegenüber dem 1,6 mm Stahlblechbauteil war jedoch um 25 % geringer.

### Bezugszeichenliste

- 10: Kunststoff-Metall-Hybridbauteil
- 12: Faserverbundhalbzeug
- 14: metallischer Grundkörper
- 20: Stahlkörper
- 22: Zinkschicht
- 24: SiOx-Schicht
- 25: modifizierter Bereich
- 26: unmodifizierte Bereich
- 27: Einbettungsmasse
- 28: Verstärkungsfaser
- 30: Parallelelement
- 40: Matrixfolie
- 42: Verstärkungshalbzeug
- 44: modifizierte Randfolie
- 46: Schmelze

## Patentansprüche

1. Verfahren zur Herstellung eines Kunststoff-Metall-Hybridbauteils aus einem metallischen Grundkörper und einem mit dem Grundkörper stoffschlüssig verbundenen Faserverbundhalbzeug, wobei das Verfahren die Schritte umfasst:
(i) Bereitstellen eines Faserverbundhalbzeugs auf Basis von Polyamid, bei dem zumindest ein Teil der Oberfläche des Halbzeugs aus einer Polymerzusammensetzung geformt ist, die folgendes enthält:
a) 100 Gewichtsteile eines Polyamids;
b) 0,5 bis 20 Gewichtsteile eines oder mehrerer haftvermittelnder Additive der Formel (I):
MₐM'_{b}D_{c}D'_{d} (I)
mit
M = [RₐSiO_{1/2}]
M' = [R'R₂SiO_{1/2}]
D = [R₂SiO_{2/2}]
D' = [R'RSiO_{2/2}]
wobei jedes R unabhängig voneinander für Methyl oder Phenyl steht und
R' ein Glycidyloxypropyl-Rest der Formel (II) ist 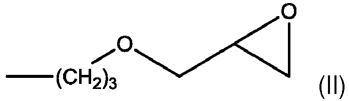 und wobei für die Indizes gilt
a = 0 bis 2
b = 0 bis 2
c = 10 bis 500
d = 0 bis 50
a + b = 2 und
b + d ≥ 2;
(ii) Bereitstellen eines metallischen Grundkörpers;
(iii) optional, Vorbehandlung der Oberfläche des metallischen Grundkörpers zur Erzeugung von Funktionalitäten;
(iv) Einbringen des metallischen Grundkörpers und des Faserverbundhalbzeugs in ein Presswerkzeug und Schließen des Werkzeugs; und
(v) stoffschlüssiges Fügen von Faserverbundhalbzeug und metallischem Grundkörper durch Verpressen unter Druck und Temperatureinwirkung.

2. Verfahren nach Anspruch 1, **dadurch gekennzeichnet, dass** der in Schritt (ii) bereitgestellte metallische Grundkörper aus verzinktem Stahlblech besteht.

3. Verfahren nach einem der vorhergehenden Ansprüche, **dadurch gekennzeichnet, dass** im Schritt (iii) eine OH-Funktionalitäten auf der Oberfläche des metallischen Körpers erzeugt werden.

4. Verfahren nach einem der vorhergehenden Ansprüche, **dadurch gekennzeichnet, dass** Schritt (v) bei einer Temperatur oberhalb der Schmelztemperatur des thermoplastischen Polymers des Faser-Kunststoff-Verbunds erfolgt.

5. Verfahren nach Anspruch 4, **dadurch gekennzeichnet, dass** die Temperatur im Schritt (v) im Bereich von 220 °C bis 300 °C liegt.

6. Verfahren nach Anspruch 4 oder 5, **dadurch gekennzeichnet, dass** die Temperatur für 0,5 bis 10 s aufrechterhalten wird.

7. Verfahren nach einem der vorhergehenden Ansprüche, **dadurch gekennzeichnet, dass** Schritt (v) unter einem Druck im Bereich von 10 bis 200 bar, insbesondere 25 bis 150 bar erfolgt.

8. Verfahren nach einem der vorhergehenden Ansprüche, **dadurch gekennzeichnet, dass** unmittelbar im Anschluss an Schritt (v) eine Werkzeugtemperatur im Bereich von 70 °C bis 130 °C für einen Zeitraum von 15 bis 90 s vorgegeben wird.

9. Kunststoff-Metall-Hybridbauteils aus einem metallischen Grundkörper und einem mit dem Grundkörper stoffschlüssig verbundenen Faserverbundhalbzeug, hergestellt nach dem Verfahren gemäß einem der vorhergehenden Ansprüche.

## Claims

1. Process for producing a polymer-metal hybrid component composed of a metallic main element and a semifinished fibre composite part joined adhesively to the main element, where the process comprises the following steps:
(i) provision of a semifinished fibre composite part based on polyamide, wherein at least part of the surface of the semifinished part is formed by a polymer composition containing the following:
a) 100 parts by weight of a polyamide;
b) from 0.5 to 20 parts by weight of one or more bonding additives of the formula (I):
**MₐM'_{b}D_{c}D'_{d}** **(I)**
where
M = [R₃SiO_{1/2}]
M' = [R'R₂SiO_{1/2}]
D = [R₂SiO_{2/2}]
D' = [R'RSiO_{2/2}]
where each R is independently methyl or phenyl and
R' is a glycidyloxypropyl radical of the formula (II) 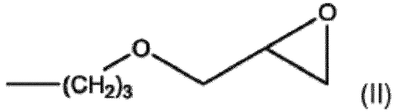 and the indices have the following values
a = 0 to 2
b = 0 to 2
c = 10 to 500
d = 0 to 50
a + b = 2 and
b + d ≥ 2;
(ii) provision of a metallic main element;
(iii)optionally pre-treatment of the surface of the metallic main element to generate functional groups;
(iv) introduction of the metallic main element and the semifinished fibre composite part into a pressing tool and closure of the tool; and
(v) adhesive joining of semifinished fibre composite part and metallic main element by pressing under pressure and the action of heat.

2. Process according to Claim 1, **characterized in that** the metallic main element provided in step (ii) consists of galvanized steel sheet.

3. Process according to either of the preceding claims, **characterized in that** OH functional groups are generated on the surface of the metallic body in step (iii).

4. Process according to any of the preceding claims, **characterized in that** step (v) is carried out at a temperature above the melting point of the thermoplastic polymer of the fibre-polymer composite.

5. Process according to Claim 4, **characterized in that** the temperature in step (v) is in the range from 220°C to 300°C.

6. Process according to Claim 4 or 5, **characterized in that** the temperature is maintained for from 0.5 to 10 s.

7. Process according to any of the preceding claims, **characterized in that** step (v) is carried out under a pressure in the range from 10 to 200 bar, in particular from 25 to 150 bar.

8. Process according to any of the preceding claims, **characterized in that** a tool temperature in the range from 70°C to 130°C is set for a period of from 15 to 90 s immediately after step (v).

9. Polymer-metal hybrid component composed of a metallic main element and a semifinished fibre composite part joined adhesively to the main element, produced by the process according to any of the preceding claims.

## Revendications

1. Procédé de fabrication d'un composant hybride plastique-métal constitué par un corps de base métallique et un semi-fini composite fibreux relié par accouplement de matière avec le corps de base, le procédé comprenant les étapes suivantes :
(i) la préparation d'un semi-fini composite fibreux à base de polyamide, au moins une partie de la surface du semi-fini étant formée par une composition de polymère, qui contient les composants suivants :
a) 100 parties en poids d'un polyamide ;
b) 0,5 à 20 parties en poids d'un ou de plusieurs additifs promoteurs d'adhésion de formule (I) :
MₐM'_{b}D_{c}D'_{d} (I)
avec
M = [RₛSiO_{1/2}]
M' = [R'R₂SiO_{1/2}]
D = [R₂SiO_{2/2}]
D' = [R'RSiO_{2/2}]
chacun des R représentant indépendamment les uns des autres méthyle ou phényle, et
R' étant un radical glycidyloxypropyle de formule (II) 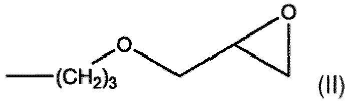 et les indices ayant les significations suivantes :
a = 0 à 2,
b = 0 à 2,
c = 10 à 500,
d = 0 à 50,
a+b = 2 et
b+d ≥ 2 ;
(ii) la préparation d'un corps de base métallique ;
(iii) éventuellement le prétraitement de la surface du corps de base métallique pour la formation de fonctionnalités ;
(iv) l'introduction du corps de base métallique et du semi-fini composite fibreux dans un moule à compression et la fermeture du moule ; et
(v) la liaison par accouplement de matière du semi-fini composite fibreux et du corps de base métallique par compression sous l'effet de la pression et de la température.

2. Procédé selon la revendication 1, **caractérisé en ce que** le corps de base métallique préparé à l'étape (ii) est constitué d'une tôle d'acier galvanisée.

3. Procédé selon l'une quelconque des revendications précédentes, **caractérisé en ce que** des fonctionnalités OH sont formées sur la surface du corps métallique à l'étape (iii).

4. Procédé selon l'une quelconque des revendications précédentes, **caractérisé en ce que** l'étape (v) a lieu à une température supérieure à la température de fusion du polymère thermoplastique du composite fibre-plastique.

5. Procédé selon la revendication 4, **caractérisé en ce que** la température à l'étape (v) se situe dans la plage allant de 220 °C à 300 °C.

6. Procédé selon la revendication 4 ou 5, **caractérisé en ce que** la température est maintenue pendant 0,5 à 10 s.

7. Procédé selon l'une quelconque des revendications précédentes, **caractérisé en ce que** l'étape (v) a lieu sous une pression dans la plage allant de 10 à 200 bar, notamment de 25 à 150 bar.

8. Procédé selon l'une quelconque des revendications précédentes, **caractérisé en ce qu'**une température de moule dans la plage allant de 70 °C à 130 °C est fixée pendant une durée de 15 à 90 s directement après l'étape (v).

9. Composant hybride plastique-métal constitué par un corps de base métallique et un semi-fini composite fibreux relié par accouplement de matière avec le corps de base, fabriqué par le procédé selon l'une quelconque des revendications précédentes.
